# EUROPÄISCHE PATENTSCHRIFT

(11) **EP 1 555 079 B1**
(45) Veröffentlichungstag und Bekanntmachung des Hinweises auf die Patenterteilung: **23.07.2008**
(21) Anmeldenummer: 04030221.8
(22) Anmeldetag: 21.12.2004
(51) Int. Cl.: B23K 1/00, B23K 1/08, F28D 9/00, F28F 3/08

(54) **Verfahren zum Herstellen von aus Plattenstapeln bestehenden Kühlern oder Kühlerelementen, mit Fügemittel auf Innenflächen der Plattendurchbrüchen oder -öffnungen**
Process for manufacturing cooling elements made of plate piling, with soldering material on the inner surfaces of passages or openings of the plates
Procédé de fabrication de refroidisseurs comprenant un empilement de plaques, avec de la brasure sur les surfaces intérieures des passages ou ouvertures des plaques

(30) Priorität: 12.01.2004 DE 102004001772; 17.01.2004 DE 102004002494; 19.01.2004 DE 102004002841
(43) Veröffentlichungstag der Anmeldung: 20.07.2005
(73) Patentinhaber: Electrovac AG, 3400 Klosterneuburg (AT)
(72) Erfinder: Dr.-Ing. Jürgen Schulz-Harder, 91207 Lauf (DE)
(74) Vertreter: Graf, Helmut

(56) Entgegenhaltungen:
- EP-A- 1 136 782
- US-A- 5 095 973
- US-B1- 6 298 910
- PATENT ABSTRACTS OF JAPAN Bd. 017, Nr. 395 (M-1451), 23. Juli 1993 (1993-07-23) -& JP 05 077039 A (NIPPON LIGHT METAL CO LTD), 30. März 1993 (1993-03-30)

## Beschreibung

Die Erfindung betrifft ein Verfahren zum Herstellen von Plattenstapeln, insbesondere zum Herstellen von aus wenigstens einem Plattenstapel bestehenden Kühlern oder Kühlerelementen oder Wärmesenken gemäß Oberbegriff des Patentanspruchs 1 (siehe, z.B., EP-A-1 136 782).

Speziell zum Kühlen von elektrischen Bauteilen oder Modulen, insbesondere auch solchen mit hoher Leistung, sind bereits Kühler, auch Mikrokühler bekannt, die aus miteinander zu einem Stapel verbundenen dönnen Platten aus Metall (Metallfolie) bestehen und von denen die im Stapel innen liegenden Platten derart strukturiert, d. h. mit Öffnungen oder Durchbrüchen versehen sind, dass sich im Inneren des Plattenstapels bzw. Kühlers Kühlkanäle oder Strömungswege für ein Kühlmedium bilden. Zum flächigen Verbinden der Platten sind diese an ihren Fügeflächen, d.h. an ihren Oberflächenseiten mit einem Fügemittel versehen. Für das Fügen bzw. Verbinden werden die Platten dann zu dem Plattenstapel übereinander gestapelt und anschließend auf eine entsprechende Prozesstemperatur erhitzt, bei der unter Verwendung des Fügemittels an den Fügeflächen ein schmelzflüssiger Metallbereich (Verbindungs- oder Schmelzschicht) erzeugt wird, so dass nach dem Abkühlen die Platten zu dem Plattenstapel miteinander verbunden sind.

Nachteilig bei dem bekannten Verfahren ist, dass sich im Inneren des Stapels am Übergang zwischen Durchbrüchen und Öffnungen zweier benachbarter Platten beim Erstarren der Verbindungs- oder Schmelzschicht in dieser Schicht Einschnürungen bzw. unerwünschte Hohl- oder Toträume bilden, die u.a. bei einem von dem Plattenstapel gebildeten Kühler zu unerwünschten Verwirbelungen in einem den Kühler durchströmenden Kühlmittel führen usw.

Bekannt ist weiterhin die Herstellung eines Wärmetauschers aus mehreren Metallplatten, die unter Verwendung eines Lots zu einem Stapel miteinander verbunden werden, und zwar zur Bildung von Kühlkanälen zwischen den Platten über metallische Abstandhalter (US-A-5,095,973). Mit dem Lot werden auch am Übergang zwischen den Platten und den Abstandhaltern gebildete Hohlräume verschlossen.

Bekannt ist weiterhin die Herstellung eines Kühlers aus mehreren Rohrstücken in der Weise, dass eine Vielzahl, von horizontalen Rohrstücken jeweils beidendig in ein vertikales Verteilerrohr münden. Die Verbindung der horizontalen Rohrstücke und der vertikalen Rohrstücke erfolgt dabei durch Hartlöten.

Bekannt ist schließlich ein Ölkühler (US-B1-6,298,910), die aus mehreren Kühlerelementen besteht, die jeweils aus zwei mit einem Lotmaterial beschichteten Aluminiumblechen bestehen, wobei jedes Kühlelement auch Öffnungen für den Durchfluss des zu kühlenden Öls aufweist. Jedes Kühlerelement bildet zwischen den beiden an Randbereichen oder im Bereich der Öffnungen dicht miteinander verbundenen Blechen einen Kanal für Kühlwasser. An den Öffnungen sind die Bleche so miteinander verknüpft oder verbunden, dass das Aluminium Material der Bleche auch an der Innenfläche jeder Öffnung weitestgehend von der Lotschicht abgedeckt ist.

Aufgabe der Erfindung ist es, ein Verfahren aufzuzeigen, welches diese Nachteile vermeidet. Zur Lösung dieser Aufgabe ist ein Verfahren entsprechend dem Patentanspruch 1 ausgebildet.

Weiterbildungen der Erfindung sind Gegenstand der Unteransprüche. Die Erfindung wird im Folgenden im Zusammenhang mit den Figuren an weiteren Ausführungsbeispielen erläutert. Es zeigen:
- Fig. 1: in vereinfachter perspektivischer Explosionsdarstellung drei Schichten oder Platten aus Metall einer Wärmesenke oder eines Kühlers zum Kühlen eines nicht dargestellten elektrischen Bauelementes oder Moduls;
- Fig. 2: in vereinfachter Darstellung und im Teilschnitt einen Kühler nach dem Stand der Technik, hergestellt durch flächiges Verbinden der in der Figur 1 dargestellten Platten;
- Fig. 3: in mehreren Positionen a - d jeweils im Schnitt die einzelnen Platten eines Kühlers gemäß der Erfindung vor ihrem Verbinden bzw. Fügen sowie in der Position e einen Schnitt durch den Kühler;
- Fig. 4: eine Darstellung wie Figur 3, jedoch bei einer weiteren möglichen Ausführungsform, die nicht die Erfindung darstellt;
- Fig. 5: in einer Darstellung ähnlich Figur 1 fünf Schichten oder Platten zum Herstellen eines Kühlers einer weiteren möglichen Ausführungsform, die nicht die Erfindung darstellt;
- Fig. 6: in den Positionen a - e jeweils im Teilschnitt die Platten der Figuren 5 vor dem Verbinden zu dem Mikrokühler sowie in der Position f einen Teilschnitt durch den von den Platten gebildeten Kühler;
- Fig. 7: eine Darstellung ähnlich Figur 6, die nicht die Erfindung darstellt;
- Fig. 8: in den Positionen a und b zwei Verfahrensschritte einer weiteren möglichen Ausführungsform, die nicht die Erfindung darstellt.

In den Figuren sind 1-4 jeweils plattenförmige Elemente oder Platten aus einem Metall, die flächig miteinander zu einem Stapel verbunden einen Kühler bzw. eine Wärmesenke oder einen Teil eines Kühlers oder einer Wärmesenke zum Kühlen eines nicht dargestellten elektrischen Bauelementes bilden. Die Platten 1 - 4 sind bei der dargestellten Ausführungsform jeweils quadratische Zuschnitte gleicher Größe aus einer Kupferfolie. Zur Bildung einer Kühlerstruktur bzw. zur Bildung von Kühlkanälen, die von einem beispielsweise flüssigen Kühlmedium durchströmbar sind, sind die Platten 1 - 3 strukturiert, d. h. die Platte 1 ist in der Nähe zweier einander gegenüber liegender Umfangsseiten und etwa in der Mitte dieser Umfangsseiten mit jeweils einem Durchbruch oder einer Öffnung 5 versehen. Das Platte 2 besitzt an den entsprechenden, einander gegenüber liegenden Umfangsseiten jeweils eine, sich parallel zu der betreffenden Umfangsseite erstreckende schlitzförmige Öffnung 6 und das Platte 3 mehrere schlitzförmige Öffnungen 7, die parallel zueinander sowie parallel zu den beiden anderen Umfangsseiten des quadratischen Zuschnitts der Platten 1 - 4 verlaufend vorgesehen sind. Die Durchbrüche oder Öffnungen 5 - 7 sind weiterhin so angeordnet, daß bei zu dem Kühler miteinander verbundenen Platten 1 - 4 jede Öffnung 5 jeweils deckungsgleich mit einer Öffnung 6 liegt, jede Öffnung 6 deckungsgleich mit einem Ende der Öffnungen 7 angeordnet ist und die Öffnungen 7 an ihrer der Platte 2 abgewandten Seite der Platte 3 durch die Platte 4 verschlossen sind.

Hierdurch sind durch die Öffnungen 7 mehrere parallele Kühlkanäle gebildet, die jeweils beidendig mit einem von einer Öffnung 6 gebildeten Verteilerkanal in Verbindung stehen. Die von den Öffnungen 6 gebildeten Verteilerkanäle sind über von den Öffnungen 5 gebildete Anschlüsse mit einem Kühlmittelkreislauf verbindbar.

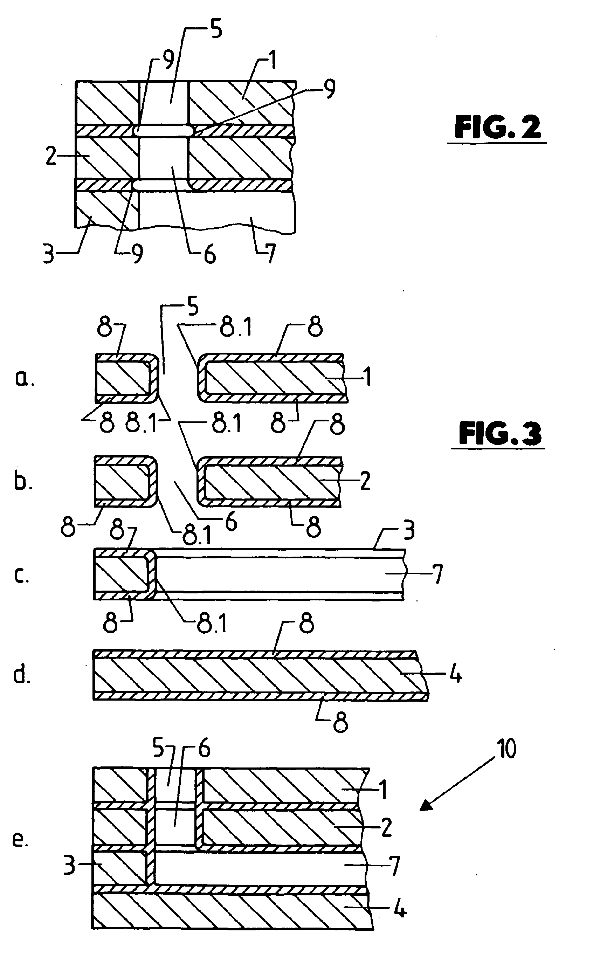

Dem Stand der Technik entsprechend werden die Platten 1 - 4 zu dem den Kühler bildenden Plattenstapel flächig miteinander verbunden, und zwar unter Verwendung eines Fügemediums oder -mittels (Beschichtung 8), welches an den im Plattenstapel aneinander anschließenden Fügeflächen oder Oberflächenseiten der Platten 1 - 4 auf die von den Öffnungen 5 - 7 nicht eingenommenen Bereiche dieser Oberflächenseiten aufgebracht ist und welches beim Fügen durch Erhitzen auf eine Prozeßtemperatur einen schmelzflüssigen Metallbereich (Verbindungs- oder Schmelzschicht) erzeugt, so daß nach dem Abkühlen die Platten 1 - 4 zu dem Plattenstapel bzw. Kühler miteinander verbunden sind.. Nachteilig hierbei ist beim Stand der Technik, daß sich nach dem Verbinden im Bereich der Öffnungen und am Übergang zwischen zwei Platten u.a. durch eine Rückbildung der Verbindungs- oder Schmelzschicht beim Abkühlen und/oder durch nicht ausreichende Benetzung mit dem schmelzflüssigen Metall während des Fügens in der Verbindungsschicht Toträume 9 bilden, wie dies in der Figur 2 im Bereich des Übergangs zwischen den Platten 1 und 2 im Bereich der Öffnungen 5 und 6 dargestellt ist.

Diese Toträume 9 haben erhebliche Nachteile, d. h. sie führen zu unerwünschten Verwirbelungen des den Kühler bzw. die Kühlkanäle durchströmenden Kühlmediums. Insbesondere führen diese Toträume 9 aber zu unerwünschten Korrosionen, insbesondere auch an den durch die Toträume 9 frei liegenden Rändern oder Kanten der Öffnungen 5 - 7.

Die Figur 3 zeigt eine erste mögliche Ausführungsform der Erfindung. Bei dieser Ausführungsform werden zum Herstellen des Plattenstapels bzw. des Kühlers 10 wiederum die Platten 1 - 4 verwendet, allerdings wird das Fügemittel vor dem Verbinden der Platten 1 - 4 derart aufgebracht, daß es als Fügemittelschicht 8 nicht nur zumindest die Fügeflächen bzw. im Kühler 10 einander benachbarten Oberflächenseiten der Platten 1 - 4 vollflächig bedeckt, sondern auch die Seiten- oder Innenflächen der Durchbrüche bzw. Öffnungen 5 - 7 mit ausreichender Dicke, wie dies in den Positionen a - d der Figur 3 jeweils mit inneren Beschichtung 8.1 angedeutet ist.

Nach dem Fügen der Platten 1 - 4 zum Kühler sind dann auch unter Berücksichtigung der Oberflächenspannung des bei dem Fügeverfahren vertlüssigten Metalls die bei dem Stand der Technik auftretenden Toträume 9 vermieden und sämtliche Flächen und Kanten, insbesondere auch die von den Seitenflächen der Öffnungen gebildeten Flächen und Kanten der Kanäle des Kühlers 10 mit dem Fügemittel abgedeckt, wie dies in der Figur 3 in der Position e für den Übergang der Platten 1 - 4 im Bereich der Öffnungen 5, 6 und 7 dargestellt ist.

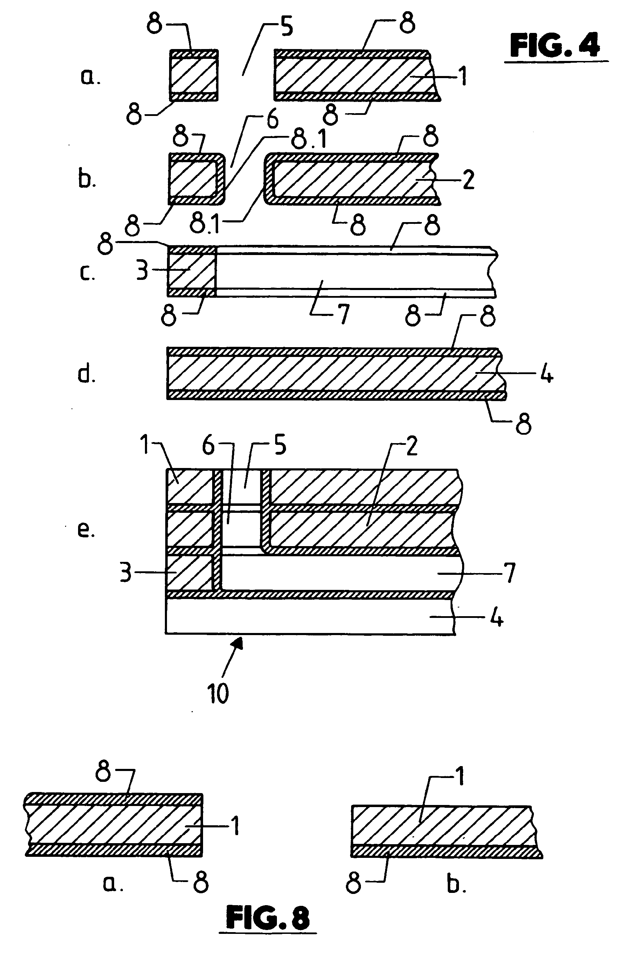

Die Figur 4 zeigt in einer Darstellung ähnlich der Figur 3 eine weitere mögliche Ausführungsform, die nicht die Erfindung darstellt. Bei dieser Ausführungsform sind nur die Durchbrechungen oder Öffnungen 6 der Platte 2 an ihren Innenflächen mit der Beschichtung 8.1 aus dem Fügemittel versehen, während die Platten 1, 3 und 4 das Fügemittel nur an ihren Fügeflächen aufweisen. Dennoch wird bei ausreichender Dicke der Beschichtung 8.1 im Bereich der Öffnungen 6, d. h. bei einem ausreichenden Volumen an Fügemittel beim Fügen eine Benetzung zumindest auch am Übergang zu den benachbarten Öffnungen 5 und 7 mit dem vom Fügemittel gebildeten Material der Verbindungsschicht in der Weise erreicht, daß die Bildung der nachteiligen Toträume 9 vermieden sind und die Ränder bzw. Kanten der benachbarten Öffnungen 5 und 7 mit dem Material der Verbindungsschicht abgedeckt sind.

Vorstehend wurde im Zusammenhang mit der Figur 4 davon ausgegangen, daß sämtliche Platten 1 - 4 zumindest an ihren Fügeflächen mit dem Fügemittel bzw. mit der Beschichtung 8 versehen sind, während bei wenigstens einer Platte 1 - 3 auch auf die Innen- oder Seitenflächen der dortigen Durchbrüche bzw. Öffnungen das Fügemittel (Beschichtung 8.1) aufgebracht ist. Grundsätzlich besteht aber auch die Möglichkeit, daß von jeweils zwei im Stapel bzw. Kühler 10 einander benachbarten Platten nur eine an ihren Oberflächenseiten und auch an den Innen- oder Seitenflächen ihrer Durchbrüche bzw. Öffnungen mit dem Fügemittel versehen ist, während die benachbarte Platte überhaupt kein Fügemittel aufweist. So ist es beispielsweise abweichend von dem im Zusammenhang mit der Figur 4 beschriebenen Ausführungsbeispiel möglich, die Platte 1 zumindest an ihrer mit der Platte 2 zu verbindenden Oberflächenseite und an den Innenflächen der Öffnungen 5 und die Platte 3 an ihren beiden Oberflächenseiten und an den Innenflächen der Öffnungen 7 mit dem Fügemittel zu versehen, während die Platten 2 und 4 ein Fügemittel nicht aufweisen. Bei dem Fügen der Platten 1-4 wird dann über das Fügemittel an den Platten 1 und 3 einerseits die Verbindung sämtlicher Plattee zum Kühler 10 bewirkt und andererseits auch erreicht, daß die Übergänge zwischen den einzelnen Platten im Bereich der Öffnungen 5-7 derart abdeckt sind, daß die unerwünschten Toträume 9 vermieden sind.

In ähnlicher Weise ist es dann auch möglich, lediglich die Platte 2 an ihren beiden Oberflächenseiten sowie an den Innenflächen der Öffnungen 6 mit dem Fügemittel zu versehen und ebenso die Platte 4 zumindest an ihrer mit der Platte 3 zu verbindenden Oberflächenseite, während die Platten 1 und 3 das Fügemittel nicht aufweisen. Beim Fügen ergibt sich wiederum eine Benetzung der Übergänge zwischen den einzelnen Platten mit dem schmelzflüssigen Metall im Bereich der Öffnungen 5 - 7 in der Weise, daß die unerwünschten Toträume 9 vermieden sind.

Weitere Varianten dieses Verfahrens sind denkbar, beispielsweise in der Form, daß lediglich die Innenflächen der Öffnungen 5 und 7 mit der Beschichtung 8.1 des Fügemittels versehen sind, während die Innenflächen der Öffnungen 6 von dem Fügemittel freigehalten sind usw.

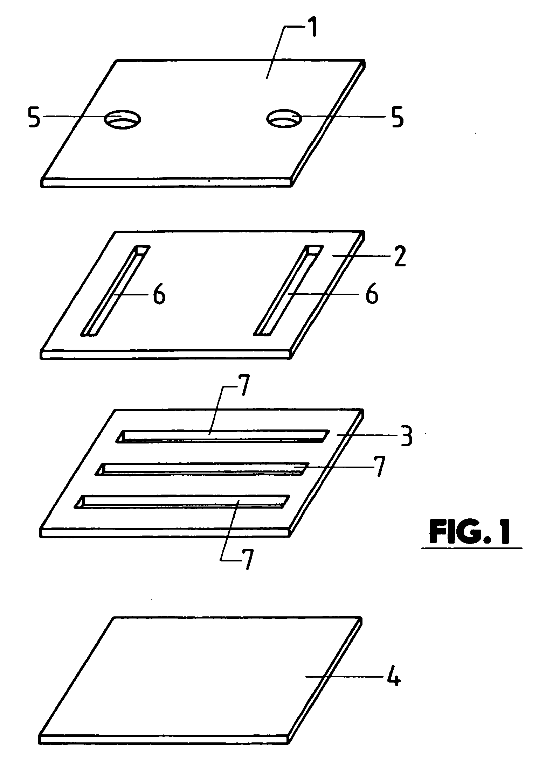

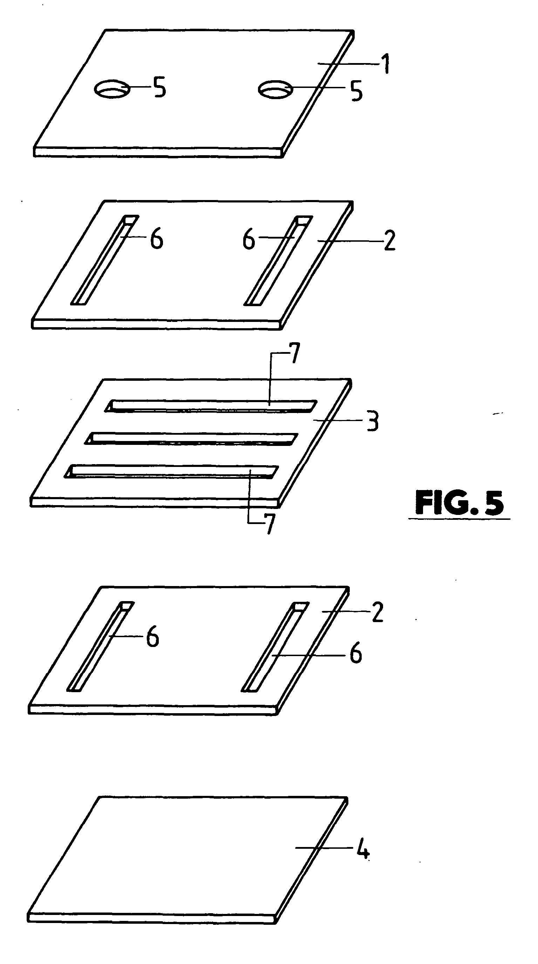

Die Figur 5 zeigt in einer Darstellung, die nicht die Erfindung darstellt ähnlich der Figur 1 die zu einem Plattenstapel bzw. zu einem Kühler 10a zu verbindenden Platten. Verwendet sind hierbei insgesamt fünf Platten, und zwar die Platten 1 - 4 sowie eine weitere Platte 2 zwischen den Platten 3 und 4, wobei die Platten bei der dargestellten Ausführungsform wiederum jeweils von einem quadratischen Zuschnitt gleicher Größe aus einer Metallfolie, beispielsweise Kupferfolie gebildet sind. Das flächige Verbinden der Platten 1 - 4 zu dem Plattenstapel oder Kühler 10a erfolgt wiederum unter Verwendung des Fügemittels und durch Erhitzen auf Prozeßtemperatur. Im Kühler 10a bilden die Durchbrüche bzw. Öffnungen 6 in den beiden Platten 2 im Querschnitt vergrößerte Verteilerkanäle und die Durchbrüche bzw. Öffnungen 7 in der Platte 3 wiederum mehrere, sich zwischen diesen Verteilerkanälen erstreckende Kühlkanäle. Durch die Platten 1 und 4 ist der Kühler 10a an beiden Seiten abgeschlossen, wobei die Öffnungen 5 wieder mit den von den Öffnungen 6 gebildeten Verteilerkanälen in Verbindung stehende äußere Anschlüsse bilden und hierfür beispielsweise mit nicht dargestellten rohrförmigen Anschlußstutzen versehen sind.

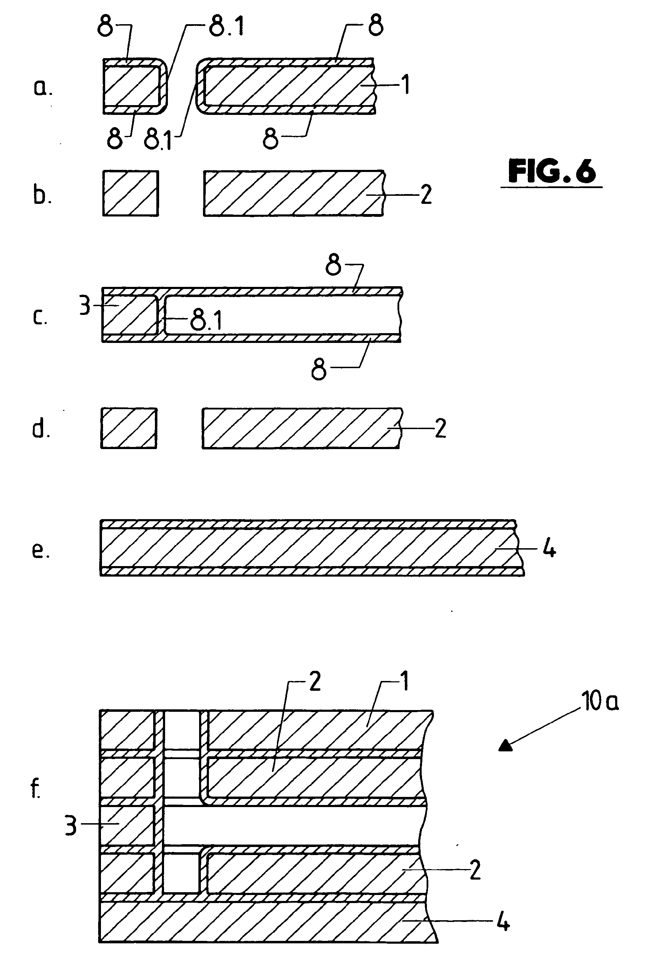

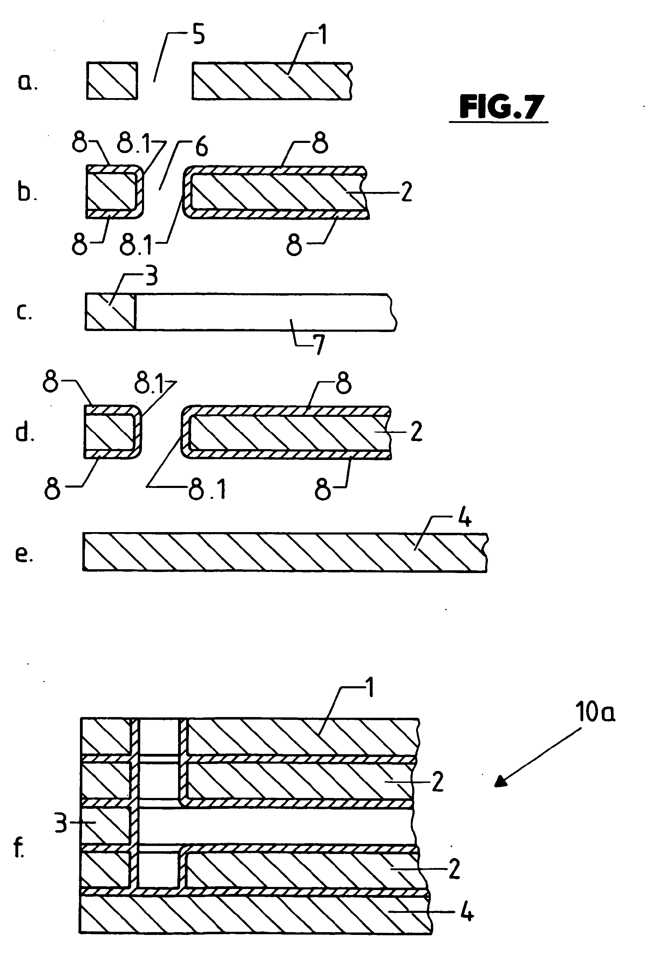

Auch bei diesem Verfahren wird das Fügemitttel nicht nur auf die miteinander zu verbindenden Oberflächenseiten bzw. Fügeflächen der Platten 1 - 4 aufgebracht, sondern zumindest bei einem Teil der Platten auch auf die Innenfläche der in diesen Platten vorgesehenen Durchbrüche bzw. Öffnungen. Beispiele hierfür sind in den Figuren 6 und 7 wiedergegeben.

Bei der in der Figur 6 dargestellten Ausführungsform, die nicht die Erfindung darstellt wird vor dem Verbinden der Platten 1 - 4 zu dem Kühler 10a nur jeweils jedes zweite Platte an ihren Oberflächenseiten sowie an den Innenflächen ihrer Öffnungen mit dem Fügemittel versehen, und zwar die Platten 1, 3 und 4, wie dies in den Positionen a, c und e mit den Beschichtungen 8 und 8.1 dargestellt ist. Beim Fügen benetzt das unter Verwendung des Fügemittels erzeugte verflüssigte Metall den Übergang sämtlicher aneinander anschließender Platten 1 - 4 im Bereich der Öffnungen 5, 6 und 7, so daß die nachteiligen Toträume 9 vermieden sind und außerdem an den Übergängen zwischen den Platteen 1 - 4 auch die Ränder der Öffnungen sowie die Innenflächen der Öffnungen mit dem Metall der Verbindungsschicht abgedeckt sind.

Das gleiche Ergebnis läßt sich entsprechend der in der Figur 7 wiedergegebenen Ausführungsform, die nicht die Erfindung darstellt auch dadurch erreichen, daß lediglich die beiden Platten 2 an den Oberflächenseiten mit dem Fügemittel (Beschichtung 8) sowie auch in den Öffnungen 6 mit dem Fügemittel (Beschichtung 8.1) versehen sind. Auch bei dieser Ausführung benetzt dann das beim Fügen verflüssigte Metall den Übergang zwischen allen Platten 1 - 4 im Bereich der Öffnungen 5 - 7 sowie auch die Innenflächen dieser Öffnungen, so daß die unerwünschten Toträume 9 vermieden sind.

Zum Fügen wird, gemäß der Erfindung, ein Direct-Copper-Bonding-Verfahren verwendet. Als Fügemittel dient dabei eine Verbindung aus dem jeweiligen Metall der Platten mit einem reaktiven Gas, d. h. bei Platten aus Kupfer CuO und/oder Cu₂O, wobei das Fügen dann unter Erhitzen der zu einem Stapel übereinander angeordneten Platten 1 - 4 in einer Inert-Gas-Atmosphäre mit geringem Sauerstoffanteil auf eine Prozeßtemperatur im Bereich zwischen 1065° und 1082°C und durch anschließendes Abkühlen auf Umgebungstemperatur erfolgt.

Das Aufbringen des Fügemittels erfolgt dann beispielsweise durch eine entsprechende chemische Behandlung der Platten 1 - 4 oder Folienzuschnitte. Bei solchen Platten, die das Fügemittel auch an den Innenflächen ihrer Durchbrüche aufweisen, erfolgt diese chemische Behandlung zur Erzeugung der Fügemittelschicht, d. h. der CuO- und/oder Cu₂O-Beschichtung erst nach dem Strukturieren bzw. Einbringen der Durchbrüche.

Bei einer Dicke der Platten im Bereich zwischen 0,1 bis 2 mm weist eine ausreichende Fügemittelbeschichtung 8.1 an den Innenflächen der Öffnungen eine Dicke von etwa 0,5 bis 1,5 µm auf.

Speziell bei dem vorstehend beschriebenen Verfahren zum Aufbringen des Fügemittels durch chemische oder galvanische Behandlung der betreffenden Platten 1 - 4 läßt es sich in der Regel nicht vermeiden, daß das Fügemittel nicht nur als Beschichtung 8.1 im Bereich der jeweiligen Durchbrüche abgeschieden wird, sondern auch als Beschichtung 8 auf beiden Oberflächenseiten der jeweiligen Platte. Ist letzteres nicht erwünscht, d. h. soll nur eine der beiden Oberflächenseiten einer Platte mit dem versehen sein, so wird die betreffende Platte nach dem Aufbringen des Fügemittels und vor dem Fügen einer weiteren Behandlung unterzogen, wie dies in der Figur 8 dargestellt ist. Die dortige Position a zeigt eine Platte, beispielsweise die Platte 1, welche an beiden Oberflächenseiten mit der Beschichtung 8 aus dem Fügemittel und im Bereich der Öffnungen 6 mit der Beschichtung 8.1 aus dem Fügemittel versehen ist. In einem weiteren Verfahrensschritt wird dann beispielsweise durch eine mechanische oder chemische Behandlung das Fügemittel an einer Oberflächenseite entfernt, so daß die Platte dann nur noch an ihrer anderen Oberflächenseite und im Bereich ihrer Öffnungen 5 mit dem Fügemittel versehen ist.

Der generelle Vorteil der Erfindung besteht u. a. darin, daß bei allen, vorbeschriebenen Ausführungsformen an den Übergängen zwischen den Platten oder Platten 1 - 4 im Bereich der Durchbrüche oder Öffnungen die beim Stand der Technik nachteiligen Toträume vermieden sind und hierdurch insbesondere auch unerwünschte Verwirbelungen im Kühlmedium. Weiterhin ist durch die vollständige Benetzung der Übergänge zwischen den Platten 1 - 4 an den Durchbrüchen bzw. Öffnungen mit dem flüssigen Metall beim Fügen auch erreicht, daß sich dort im fertiggestellten Stapel dann überall gleiches Material an der Oberfläche befindet und dadurch eine Kontaktkorrosion durch unterschiedliches, mit dem flüssigen Kühlmedium (z. B. Wasser) in Berührung stehendes Material vermieden ist.

Speziell die im Zusammenhang mit den Figuren 5 und 7 beschriebenen Ausführungsformen, die nicht die Erfindung darstellt haben den Vorteil, daß nur auf einige der Platten 1 - 4 vor dem Fügen das Fügemittel aufgebracht werden muß, wodurch sich eine Reduzierung der Herstellungs- und Bearbeitungskosten ergibt. Überraschenderweise werden auch bei diesen Ausführungsformen die Übergänge zwischen den einzelnen Platten im Bereich deren Durchbrüche oder Öffnungen vollständig mit dem vom Fügemittel gebildeten schmelzflüssigen Metall benetzt, so daß nicht nur die unerwünschten Toträume 9 des Standes der Technik vermieden sind, sondern auch zumindest im Bereich der Öffnungen die Oberfläche der von dem Kühlmittel durchströmten Kanäle jeweils von gleichem Material gebildet sind und somit auch hier eine Kaltkorrosion zumindest weitestgehend vermieden ist.

Die Erfindung wurde voranstehend an verschiedenen Ausführungsbeispielen beschrieben. Es versteht sich, daß verschiedene weitere Abwandlungen möglich sind, ohne daß dadurch der der Erfindung zu Grunde liegende Erfindungsgedanke verlassen wird.

### Bezugszeichenliste

- 1, 2, 3, 4: Platte oder plattenförmiges Element
- 5, 6, 7: Durchbruch oder Öffnung
- 8: Fügemittelbeschichtung oder -auftrag an den Oberflächenseiten
- 8.1: Fügemittelbeschichtung oder -auftrag an den Durchbrüchen
- 9: Totraum
- 10, 10a: Kühler

## Patentansprüche

1. Verfahren zum Herstellen von Plattenstapeln, insbesondere zum Herstellen von aus wenigstens einem Plattenstapel bestehenden Kühlern oder Kühlerelementen, mit wenigstens zwei mit durchgehenden Öffnungen (5, 7) versehenen plattenförmigen Elementen (1 - 4) aus Kupfer, wobei die gestapelten Elemente (1 - 4) unter Verwendung eines Fügemittels auf von Oberflächenseiten dieser Elemente gebildeten Fügeflächen durch Erhitzen auf eine Prozesstemperatur zu dem Stapel miteinander verbunden werden, **dadurch gekennzeichnet, dass** vor dem Fügen das Fügemittel auch auf Innenflächen der Öffnungen (5, 7) aufgebracht ist, wobei das Verbinden der plattenförmigen Elemente (1 - 4) nach dem DCB-Verfahren unter Verwendung von CuO und/oder Cu₂O erfolgt, in dem das CuO und/oder Cu₂O auf die Innenflächen der Öffnungen aufgebracht ist, und dass das Fügen bei einer Prozesstemperatur im Bereich zwischen 1065°C und 1082°C erfolgt.

2. Verfahren nach Anspruch 1, **dadurch gekennzeichnet, dass** zurächst an Fügeflächen und an den Innenflächen der Öffnungen (5, 6, 7) das Fügemittel CuO und/oder Cu₂O aufgebracht wird und die Elemente (1 - 4) dann gestapelt und durch Erhitzen auf die Prozesstemperatur im Bereich zwischen 1065°C und 1082°C miteinander verbunden werden.

3. Verfahren nach Anspruch 1 oder 2, **dadurch gekennzeichnet, dass** vor dem Fügen sämtliche Elemente (1 - 4) zumindest an ihren Fügeflächen und an sämtlichen vorhandenen Öffnungen (5 - 7) mit CuO und/oder Cu₂O durch eine chemische Behandlung aufgebracht werden.

## Claims

1. Method for manufacturing plate stacks, more particularly for manufacturing coolers or cooler elements consisting of at least one plate stack, with at least two plate-type elements (1-4) of copper provided with full-length openings (5, 7) wherein by using a joining medium on the joining faces formed by the surface side of the elements the stacked elements (1-4) are connected to one another by heating to a processing temperature to form a stack, **characterised in that** prior to joining, the joining medium is also applied to the inside faces of the openings (5, 7) wherein the connection of the plate-type elements (1-4) takes place according to the DCB method by using CuO and/or Cu₂O in which the CuO and/or Cu₂O is applied to the inside faces of the openings, and that the joining takes place at a processing temperature in the range between 1065°C and 1082°C.

2. Method according to claim 1 **characterised in that** the joining medium CuO and/or Cu₂O is applied first to the joining faces and the inside faces of the openings (5, 6, 7) and then the elements (1-4) are stacked and connected to one another by heating to the processing temperature in the range between 1065°C and 1082°C.

3. Method according to claim 1 or 2 **characterised in that** prior to joining, all the elements (1-4) are coated with CuO and/or Cu₂O through a chemical treatment at least on their joining faces and on all the existing openings (5-7).

## Revendications

1. Procédé pour fabriquer des empilements de plaques, en particulier pour fabriquer des refroidisseurs ou des éléments de refroidisseur constitués d'au moins un empilement de plaques, avec au moins deux éléments (1 - 4) en cuivre en forme de plaque pourvus de deux ouvertures passantes (5, 7), les éléments (1 - 4) empilés étant reliés les uns aux autres pour former l'empilement par échauffement à une température de traitement en utilisant un agent d'assemblage sur des surfaces d'assemblage formées par des côtés superficiels de ces éléments, **caractérisé en ce que** l'agent d'assemblage est également appliqué sur des surfaces intérieures des ouvertures (5, 7) avant l'assemblage, la liaison des éléments (1 - 4) en forme de plaque ayant lieu selon le procédé DCB en utilisant du CuO et/ou du Cu₂O, dans lequel le CuO et / ou le Cu₂O est appliqué sur les surfaces intérieures des ouvertures, et **en ce que** l'assemblage a lieu à une température de traitement dans la plage comprise entre 1065° C et 1082° C.

2. Procédé selon la revendication 1, **caractérisé en ce que** du CuO et / ou du Cu₂O est appliqué tout d'abord sur les surfaces d'assemblage et sur les surfaces intérieures des ouvertures (5, 6, 7) et les éléments (1 - 4) sont ensuite empilés et sont reliés les uns aux autres par échauffement à la température de traitement dans la plage comprise entre 1065° C et 1082° C.

3. Procédé selon la revendication 1 ou 2, **caractérisé en ce qu'**avant l'assemblage, tous les éléments (1 - 4) sont pourvus de CuO et / ou de Cu₂O appliqué par un traitement chimique sur leurs surfaces d'assemblage et sur toutes les ouvertures (5 - 7) présentes.
